(19) Europäisches Patentamt

European Patent Office

Office européen des brevets

(11) **EP 0 987 682 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
*G10L 15/06* (2006.01)     *G10L 15/18* (2006.01)

(21) Anmeldenummer: **99202896.9**

(22) Anmeldetag: **08.09.1999**

(54) **Verfahren zur Adaption von linguistischen Sprachmodellen**

Method for adapting linguistic language models

Procédé d'adaptation des modèles de language pour la reconnaissance de la parole

(84) Benannte Vertragsstaaten:
**DE FR GB**

(30) Priorität: **15.09.1998 DE 19842151**

(43) Veröffentlichungstag der Anmeldung:
**22.03.2000 Patentblatt 2000/12**

(73) Patentinhaber:
  • **Philips Intellectual Property & Standards GmbH**
    **20099 Hamburg (DE)**
    Benannte Vertragsstaaten:
    **DE**
  • **Koninklijke Philips Electronics N.V.**
    **5621 BA Eindhoven (NL)**
    Benannte Vertragsstaaten:
    **FR GB**

(72) Erfinder:
  • **Souvignier, Bernd**
    **52064 Aachen (DE)**
  • **Kellner, Andreas**
    **52064 Aachen (DE)**

(74) Vertreter: **Volmer, Georg et al**
    **Philips Intellectual Property & Standards GmbH,**
    **Postfach 50 04 42**
    **52088 Aachen (DE)**

(56) Entgegenhaltungen:
**US-A- 5 606 644**

• **HOMMA S ET AL: "Improved estimation of supervision in unsupervised speaker adaptation" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21. April 1997 (1997-04-21), Seiten 1023-1026, XP010225971 ISBN: 0-8186-7919-0**
• **CLARKSON P R ET AL: "Language model adaptation using mixtures and an exponentially decaying cache" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21. April 1997 (1997-04-21), Seiten 799-802, XP010225915 ISBN: 0-8186-7919-0**

**Beschreibung**

Die Erfindung betrifft ein Verfahren zur Adaption von linguistischen Sprachmodellen in Systemen mit automatischer Spracherkennung mittels während des Betriebs der Systeme erhaltener Spracherkennungsergebnisse, wobei während der Adaption eine Auswertung einer Liste N bester Erkennungsergebnisalternativen mit N > 1 für eine zu erkennende sprachliche Äußerung vorgesehen ist.

Eine entsprechende Online-Adaption von Sprachmodellen ist insbesondere in Dialogsystemen mit automatischer Spracherkennung erforderlich. Solche Dialogsysteme ermöglichen beispielsweise eine sprachgesteuerte Datenbankabfrage. Als Beispiele sollen hier Bahnfahrplanauskunftssysteme, Fernsprechauskunftssysteme, Flughafenauskunftssysteme und Auskunftssysteme für den Kundenverkehr von Banken genannt werden.

Die Spracherkennung wird mittels stochastister Modelle durchgeführt. Es werden sowohl akustische Modelle, die auf sogenannten HMM-Modellen ("Hidden Markov Model") fußen, als auch linguistische Sprachmodelle, die Auftrittswahrscheinlichkeiten von Sprachelementen semantischer und syntaktischer Natur repräsentieren, eingesetzt. Häufig besteht gerade bei Dialogsystemen das Problem, daß für das vor der Inbetriebnahme durchgeführte Training der für die Spracherkennung verwendeten linguistischen Sprachmodelle nicht genügend Trainingsmaterial zur Verfügung steht. Aus diesem Grunde ist es bei Dialogsystemen wünschenswert, eine Online-Adaption vorzusehen, bei der die während des Betriebs erhaltenen Spracherkennungsergebnisse zur weiteren Verbesserung des verwendeten linguistischen Sprachmodells bzw. zur Adaption auf die jeweiligen Anwendungsfälle verwendet werden. Eine solche Adaption wird als unüberwacht bezeichnet, da dem Spracherkenner nur das ermittelte Spracherkennungsergebnis, nicht aber eine gesicherte Information über die tatsächlich abgegebene sprachliche Äußerung zur Verfügung steht.

Aus S. Homma et. al., "Improved Estimation of Supervision in Unsupervised Speaker Adaption", ICASSP 1997, Seiten 1023-1026, ist es bekannt, bei einer derartigen unüberwachten Online-Adaption von linguistischen Sprachmodellen aus einer Liste N bester Erkennungsergebnisalternativen, die für eine sprachliche Äußerung ermittelt wurden, die beste Erkennungsergebnisalternative, d. h. diejenige mit der größten Wahrscheinlichkeit nur dann für die Online-Adaption zu verwenden, wenn die Differenz zwischen dieser Wahrscheinlichkeit und der Wahrscheinlichkeit der zweitbesten Erkennungsergebnisalternative einen bestimmten vorgebbaren Schwellwert überschreitet.

In der US-Patentschrift US 5,606,644 wird ein Verfahren zur Herstellung einer Datenbank mit Modellen für Spracherkennung offenbart. Die Datenbank wird dabei basierend auf einem Signal für eine Trainingsäußerung und einer Mehrzahl von Sätzen von Spracherkennungsmodellen gebildet. Diese Spracherkennungsmodelle können akustischen Modelle, linguistische Modelle oder sonstige Wissensquellen umfassen.

Der Erfindung liegt nun die Aufgabe zugrunde, die Online-Adaption der linguistischen Sprachmodelle zu verbessern.

Die Aufgabe wird dadurch gelöst, daß in die Adaption eine Kombination mehrerer Erkennungsergebnisalternativen der Liste eingeht. Hierzu werden ein Verfahren gemäß Anspruch 1 und ein System gemäß Anspruch 3 vorgeschlagen.

Dies hat den Vorteil, daß ein Ausgleich für die Fälle geschaffen wird, in denen das als beste Erkennungsergebnisalternative bewertete Element der Liste N bester Erkennungsergebnisalternativen nicht der tatsächlich abgegebenen sprachlichen Äußerung entspricht. Diese wird allerdings regelmäßig durch mindestens eine andere Erkennungsergebnisalternative der Liste repräsentiert sein. Durch die erfindungsgemäße Kombination mehrerer Erkennungsergebnisalternativen der Liste wird für derartige Fälle ein fehlerreduzierender Ausgleich erzielt, was letztlich zu einer verbesserten Online-Adaption bezüglich der linguistischen Sprachmodellierung führt.

Insbesondere bei der Erkennung von Folgen einzelner Sprachelemente, die zu einer sprachlichen Äußerung zusammengefaßt werden, nutzt die Erfindung den Umstand aus, daß einzelne Sprachelemente der tatsächlich abgegebenen sprachlichen Äußerung, wenn auch nicht in der besten Erkennungsalternative, so doch mit hoher Wahrscheinlichkeit in mindestens einer der anderen Listenelemente der Liste N bester Erkennungsergebnisalternativen repräsentiert sind. Bei der Online-Adaption werden in derartigen Fällen solche Teile von Erkennungsergebnisalternativen nicht übergangen, sondern mit einem bestimmten Gewicht berücksichtigt. Weiterhin ist in Fällen, bei denen in der besten Erkennungsergebnisalternative der Liste N bester Erkennungsergebnisalternativen Sprachelemente repräsentiert sind, die nicht Teil der tatsächlich abgegebenen sprachlichen Äußerung waren, es sehr wahrscheinlich, daß solche Sprachelemente in den übrigen Listenelementen nicht repräsentiert sind. Auch hier schafft eine Berücksichtigung weiterer Listenelemente einen Ausgleich für einen Fehler, der aufträte, wenn nur das beste Listenelement berücksichtigt würde.

Bei der Umsetzung des Erfindungsgedankens ist insbesondere vorgesehen, daß bei der Kombination von Erkennungsergebnisalternativen der Liste diesen Alternativen zugeordnete Wahrscheinlichkeitswerte mit einem bestimmten Zahlenwert gewichtet werden und daß ein Adaptionsgewicht für eine für die Adaption verwendete Erkennungsergebnisalternative dadurch gebildet wird, daß der dieser Erkennungsergebnisalternative zugeordnete gewichtete Wahrscheinlichkeitswert in Bezug gesetzt wird zur Summe der den übrigen Erkennungsergebnisalternativen der Liste zugeordneten gewichteten Wahrscheinlichkeitswerten.

Diese einfach zu realisierende und zu guten Adaptionsergebnissen führende Ausgestaltung wird dadurch konkretisiert, daß die Adaptionsgewichte nach der Formel

$$\omega_i = \frac{l_i^{\lambda}}{\sum\limits_{j=1}^{N} l_j^{\lambda}}$$

mit

$T_i$ als Adaptionsgewicht bezüglich des i-ten Elements der Liste N bester Erkennungsergebnisalternativen und

$l_i$ als Wahrscheinlichkeitswert des i-ten Elements der Liste N bester Erkennungsergebnisalternativen

gebildet werden. Das Gewicht 8 ist für jeden Anwendungsfall neu heuristisch zu ermitteln. Wenn die Wahrscheinlichkeitswerte $l_i$ in logarithmierter Form vorliegen, hat dieser Ansatz den Vorteil, daß die Potenzierung mit dem Gewicht 8 in eine Multiplikation mit diesem Gewicht übergeht.

Die Erfindung bezieht sich auch auf ein Spracherkennungssystem, bei dem eine Adaption eines für die Spracherkennung verwendeten linguistischen Sprachmodells gemäß einem der oben beschriebenen Verfahren durchgeführt wird.

Ausführungsbeispiele der Erfindung werden im folgenden anhand der Zeichnungen näher erläutert. Es zeigen:

Fig. 1 die Grundstruktur eines erfindungsgemäßen Spracherkennungssystems,
Fig. 2 ein Dialogsystem mit einer erfindungsgemäßen automatischen Spracherkennung,
Fig. 3 ein Beispiel für einen Wortgraphen.

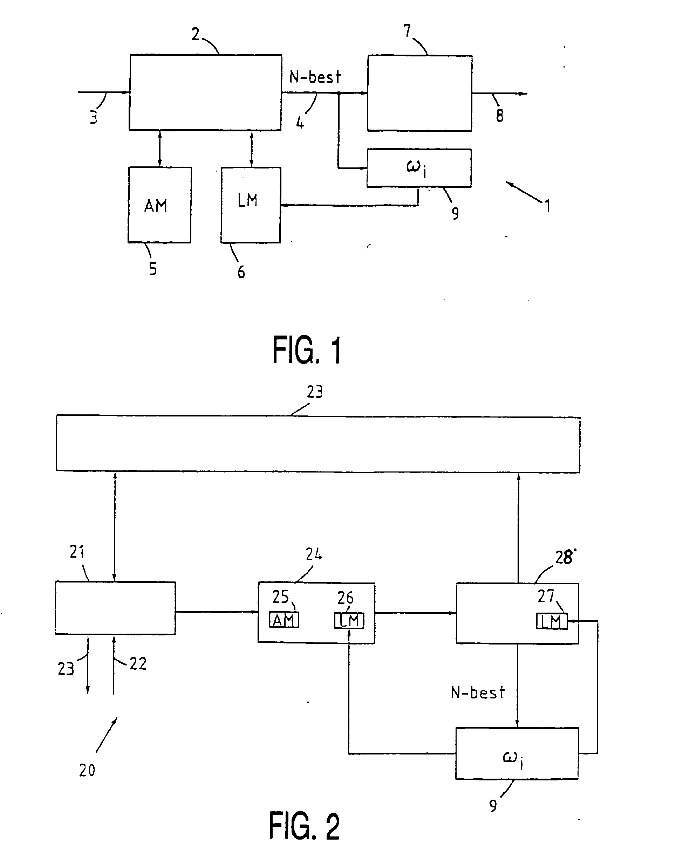

Das in Fig. 1 gezeigte Spracherkennungssystem 1 weist einen Funktionsblock 2 auf, der Module des Spracherkennungssystems 1 zusammenfaßt, denen eingangsseitig (Bezugszeichen 3) Sprachsignale repräsentierende Merkmalsvektoren zugeführt werden. Diese werden dadurch erzeugt, daß in elektrischer Form vorliegende Sprachsignale abgetastet und quantisiert werden und anschließend in aufeinanderfolgende sich teilweise überlappende Rahmen eingeteilt werden, für die jeweils eine Cepstral-Analyse durchgeführt wird, die schließlich die Komponenten der dem Funktionsblock 2 zugeführten Merkmalsvektoren liefert. Der Funktionsblock 2 repräsentiert eine Wahrscheinlichkeitsmaximierung nach der bekannten Bayes-Regel, und liefert ausgangsseitig (Bezugszeichen 4) N-beste Erkennungsergebnisalternativen mit N > 1, für die die größten Wahrscheinlichkeitswerte bestimmt wurden. In die Verarbeitung gemäß Funktionsblock 2 gehen üblicherweise stochastische Sprachmodelle ein, die vor der Inbetriebnahme des Spracherkennungssystems 1 trainiert wurden. Einerseits sind dies akustische Modelle (Funktionsblock 5) und andererseits auch linguistische Sprachmodelle (Funktionsblock 6). Zur akustischen Modellierung werden sogenannte HMM-Modelle verwendet. Bei der linguistischen Sprachmodellierung werden einzelnen oder auch Kombinationen von Elementen eines Sprachvokabulars Auftrittswahrscheinlichkeiten zugeordnet.

Ein Funktionsblock 7 beschreibt die Generierung eines Erkennungsergebnisses an seinem Ausgang 8, das dem Element der Liste N bester Erkennungsergebnisalternativen entspricht, dem die höchste Wahrscheinlichkeit zugeordnet wurde.

Die jeweilige am Ausgang 4 vorliegende Liste N-bester Erkennungsergebnisalternativen wird außerdem zur Online-Adaption des linguistischen Sprachmodells 6 verwendet.

Hierzu werden Adaptionsgewichte $\omega_i$ nach der Formel

$$\omega_i = \frac{l_i^{\lambda}}{\sum\limits_{j=1}^{N} l_j^{\lambda}}$$

mit

$\omega_i$ als Adaptionsgewicht bezüglich des i-ten Elements der Liste N bester Erkennungsergebnisalternativen und

$l_i$ als Wahrscheinlichkeitswert des i-ten Elements der Liste N bester Erkennungsergebnisalternativen

bestimmt (Funktionsblock 9). Das Gewicht $\lambda$ ist ein heuristisch ermittelter Zahlenwert, der für jede Anwendung neu zu bestimmen ist. Um die so bestimmten Adaptionsgewichte $\omega_i$ werden die zugehörigen Auftrittshäufigkeiten erhöht, aus denen sich die Auftrittswahrscheinlichkeiten des linguistischen Sprachmodells (Funktionsblock 6) berechnen, so daß die Auftrittswahrscheinlichkeiten mit einem entsprechenden bestimmten Zahlenwert gewichtet werden.

Fig. 2 zeigt ein erfindungsgemäßes Dialogsystem 20, das beispielsweise für Zwecke der Bahnfahrplanauskunft, der Fernsprechauskunft, der Flughafenauskunft, oder auch für Auskunftsysteme für den Kundenverkehr von Banken verwendet werden kann. Über eine Benutzerschnittstelle 21 werden dem System auszuwertende sprachliche Äußerungen (Bezugszeichen 22) zugeführt. Über die Benutzerschnittstelle 21 können als Antwort des Systems 20 auf eine empfangene sprachliche Äußerung mittels einer Dialogsteuerung 23 generierter Sprachsignale am Ausgang 23 an einen Benutzer als Antwort auf eine Spracheingabe ausgegeben werden.

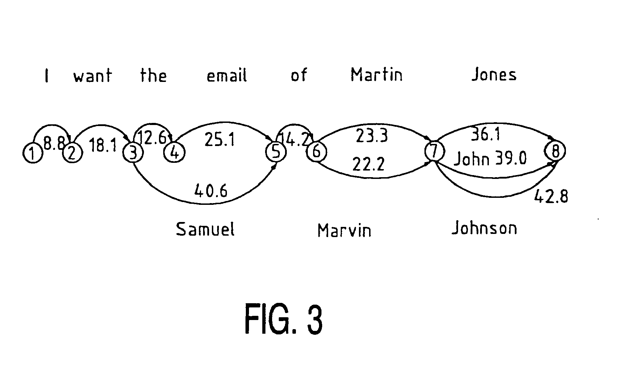

Die Benutzerschnittstelle 21 liefert in elektrischer Form vorliegende Sprachsignale an ein Spracherkennungsmodul 24, in das akustische Modelle 25 und linguistische Modelle 26 integriert sind. Bezüglich der Wirkungsweise der akustischen Modelle 25 wird auf die Ausführungen zu Figur 1 verwiesen. Im Unterschied zu Fig. 1 liefert das Spracherkennungsmodul 24 allerdings nicht eine Liste N bester Erkennungsergebnisalternativen, sondern einen Wortgraph, dessen Knoten Zeitpunkten und dessen Kanten einzelnen Wörtern einer sprachlichen Äußerung entsprechen. Den einzelnen Kanten sind Auftrittswahrscheinlichkeiten für das jeweilige Wort zugeordnet. Die durch den Funktionsblock 26 repräsentierten linguistischen Sprachmodelle dienen zur Fokussierung des jeweiligen vom Funktionsblock 24 gelieferten Wortgraphen, d.h. gegenüber einem allein aufgrund der verwendeten akustischen Modelle 25 erzeugten Wortgraphen enthält hier ein vom Funktionsblock 24 ausgegebener Wortgraph solche Erkennungsalternativen nicht, die aufgrund der zugehörigen Auftrittswahrscheinlichkeiten gemäß dem linguistischen Modell 26 nur mit geringer Wahrscheinlichkeit als Erkennungsergebnis in Frage kommen. Ein Beispiel für einen Wortgraphen zeigt Fig. 3. Dieser Wortgraph hat acht Knoten. Die den einzelnen Kanten zugeordneten Wahrscheinlichkeitswerte liegen als negativer natürlicher Logarithmus der jeweiligen Auftrittswahrscheinlichkeit vor.

Die vom Spracherkennungsmodul 24 generierten Wortgraphen werden von einem Sprachverstehen-Modul 28 auf ihren Sinngehalt hin analysiert. Auch hier findet ein mit dem Bezugszeichen 27 bezeichnetes linguistisches Sprachmodell Eingang. Dieses umfaßt im vorliegenden Fall eine Grammatik-Sprachmodellierung, eine Füllwort-Sprachmodellierung und eine Konzept-Sprachmodellierung. Füller werden verwendet, um die Teile des Wortgraphen zu modellieren, die nicht durch Konzepte erfaßt werden. Als Konzepte werden sinntragende Kategorien von Teilen von Sprachäußerungen bezeichnet. Ihr konkretisierter Inhalt sind die sogenannten Attribute. Nähere Informationen zur Struktur des Sprachverstehen-Moduls 28 bzw. zur linguistischen Sprachmodellierung gemäß Funktionsblock 27 lassen sich dem Aufsatz von Harald Aust et. al., "A Spoken Language Inquiry System for Automatic Train Timetable Information", Philips J. R. 49, 1995, Seiten 399-418, entnehmen.

Die durch die Funktionsblöcke 26 und 27 repräsentierten linguistischen Sprachmodelle enthalten Auftrittswahrscheinlichkeiten linguistischer Sprachelemente, die entsprechend dem schon in Fig. 1 erläuterten Ansatz einer Online-Adaption unterzogen werden. Auch hier werden aus einer Liste N bester Erkennungsergebnisalternativen Adaptionsgewichte $\omega_i$ entsprechend der schon oben angeführten Formel bestimmt. Die Liste N bester Erkennungsergebnisalternativen wird beim Dialogsystem 20 vom Sprachverstehen-Modul 28 geliefert. Die Adaption der durch die linguistischen Sprachmodelle 26 und 27 zusammengefaßten Auftrittswahrscheinlichkeiten durch die Adaptionsgewichte $\omega_i$ erfolgt wie schon oben beschrieben.

Das Sprachverstehen-Modul 28 liefert im Betrieb des Dialogsystems 20 die jeweils beste Erkennungsergebnisalternative an die Dialogsteuerung, die daraufhin über die Benutzerschnittstelle 21 eine gemäß der jeweiligen Anwendung als Reaktion auf ein solches Erkennungsergebnis vorgesehene Sprachausgabe an den Benutzer bewirkt.

**Patentansprüche**

1. Verfahren zur Adaption von linguistischen Sprachmodellen (6, 26, 27) in Systemen mit automatischer Spracherkennung mittels während des Betriebs der Systeme erhaltener Spracherkennungsergebnisse, wobei während der Adaption eine Auswertung einer Liste N bester Erkennungsergebnisalternativen mit N > 1 für eine zu erkennende sprachliche Äußerung vorgesehen ist und in die Adaption eine Kombination mehrerer Erkennungsergebnisalternativen der Liste eingeht,
**dadurch gekennzeichnet,**
**dass** bei der Kombination von Erkennungsergebnisalternativen der Liste diesen Alternativen zugeordnete Wahrscheinlichkeitswerte mit einem bestimmten Zahlenwert gewichtet werden und
**dass** ein Adaptionsgewicht für eine für die Adaption verwendete Erkennungsergebnisalternative dadurch gebildet wird, dass der dieser Erkennungsergebnisalternative zugeordnete gewichtete Wahrscheinlichkeitswert in Bezug gesetzt wird zur Summe der den übrigen Erkennungsergebnisalternativen der Liste zugeordneten gewichteten Wahrscheinlichkeitswerten.

2. Verfahren nach Anspruch 1,
**dadurch gekennzeichnet,**
**dass** die Adaptionsgewichte nach der Formel

$$\omega_i = \frac{l_i^{\lambda}}{\sum_{j=1}^{N} l_j^{\lambda}}$$

mit
$T_i$ als Adaptionsgewicht bezüglich des i-ten Elements der Liste N bester Erkennungsergebnisalternativen,
$l_i$ als Wahrscheinlichkeitswert des i-ten Elements der Liste N bester Erkennungsergebnisalternativen, und
$\lambda$ ein Gewicht.

3. Spracherkennungssystem (1), bei dem eine Adaption eines für die Spracherkennung verwendeten linguistischen Sprachmodells (6) vorgesehen ist, mit

- einem Funktionsblock (7) zum Empfang und Auswertung einer Liste N bester Erkennungsergebnisalternativen mit N > 1 (4) für eine zu erkennende sprachliche Äußerung und zur Generierung eines Erkennungsergebnisses (8), wobei in die Adaption eine Kombination mehrerer Erkennungsergebnisalternativen der Liste eingeht und bei der Kombination von Erkennungsergebnisalternativen der Liste diesen Alternativen zugeordnete Wahrscheinlichkeitswerte mit einem bestimmten Zahlenwert gewichtet werden,
- einem Funk-tionsblock (9) zur Bildung eines Adaptionsgewichtes für eine für die Adaption verwendete Erkennungsergebnisalternative, wobei das Adaptionsgewicht dadurch gebildet wird, dass der dieser Erkennungsergebnisalternative zugeordnete gewichtete Wahrscheinlichkeitswert in Bezug gesetzt wird zur Summe der den übrigen Erkennungsergebnisalternativen der Liste zugeordneten gewichteten Wahrscheinlichkeitswerten.

**Claims**

1. A method of adapting linguistic speech models (6, 26, 27) in automatic speech recognition systems by means of speech recognition results obtained during operation of the systems, in which, during the adaptation, a list of N-best recognition result alternatives with N > 1 for a speech utterance to be recognized is evaluated, and a combination of a plurality of recognition result alternatives of the list is included in the adaptation, **characterized in that**, in the combination of recognition result alternatives of the list, probability values assigned to these alternatives are weighted with a given numerical value, and an adaptation weight for a recognition result alternative used for the adaptation is formed **in that** the weighted probability value assigned to this recognition result alternative is related to the sum of the weighted probability values assigned to the other recognition result alternatives of the list.

2. A method as claimed in claim 1, **characterized in that** the adaptation weights are defined in accordance with the formula

$$\omega_i = \frac{l_i^{\lambda}}{\sum_{j=1}^{N} l_j^{\lambda}}$$

in which
$\omega_i$ is the adaptation weight relating to the i<sup>th</sup> element of the list ofN-best recognition result alternatives,
$l_i$ is the probability value of the i<sup>th</sup> element of the list ofN-best recognition result alternatives, and
$\lambda$ is a weight.

3. A speech recognition system (1) wherein a linguistic speech model (6) used for speech recognition is adapted, the system comprising:

- a function block (7) for receiving and evaluating a list of N-best recognition result alternatives with N > 1 (4) for a speech utterance to be recognized and for generating a recognition result (8), in which a combination of a plurality of recognition result alternatives of the list is included in the adaptation and, in the combination of recognition result alternatives of the list, probability values assigned to these alternatives are weighted with a given numerical value,
- a function block (9) for forming an adaptation weight for a recognition result alternative used for the adaptation, which adaptation weight is formed in that the weighted probability value assigned to this recognition result alternative is related to the sum of the weighted probability values assigned to the other recognition result alternatives of the list.

**Revendications**

1. Procédé d'adaptation de modèles de parole linguistiques (6, 26, 27) dans des systèmes avec reconnaissance automatique de la parole à l'aide des résultats de reconnaissance de la parole obtenus pendant le fonctionnement des systèmes, une évaluation d'une liste N des meilleures alternatives de résultat de reconnaissance avec N>1 étant prévue pendant l'adaptation pour une expression de parole à reconnaître et une combinaison de plusieurs alternatives de reconnaissance de parole de la liste étant incluse dans l'adaptation,
**caractérisé en ce**
**que**, pour la combinaison d'alternatives de résultat de reconnaissance de la liste, les valeurs de probabilité attribuées à ces alternatives sont pondérées avec une valeur numérique déterminée et
**qu'**une pondération d'adaptation pour une alternative de résultat de reconnaissance utilisée pour l'adaptation est formée par le fait que la valeur de probabilité pondérée attribuée à cette alternative de résultat de reconnaissance est utilisée pour la somme des valeurs de probabilité pondérées attribuées aux autres alternatives de résultat de reconnaissance de la liste.

2. Procédé selon la revendication 1,
**caractérisé en ce**
**que** les pondérations d'adaptation sont formées selon la formule :

$$\omega_i = \frac{l_i^{\lambda}}{\displaystyle\sum_{j=1}^{N} l_j^{\lambda}}$$

avec :

T$_i$ comme pondération d'adaptation par rapport au ième élément de la liste N des meilleures alternatives de résultat de reconnaissance et l$_i$ comme valeur de probabilité du ième élément de la liste N des meilleures alternatives de résultat de reconnaissance et λ comme pondération.

3. Système de reconnaissance de la parole (1) dans lequel une adaptation d'un modèle de parole (6) linguistique utilisé pour la reconnaissance de parole est prévue avec :

- un bloc fonctionnel (7) pour la réception et l'évaluation d'une liste des N meilleures alternatives de résultat de reconnaissance avec N > 1 (4) pour une expression de parole à reconnaître et pour la génération d'un résultat de reconnaissance (8), une combinaison de plusieurs alternatives de résultat de reconnaissance de la liste étant incluse dans l'adaptation et les valeurs de probabilité attribuées à ces alternatives lors de la combinaison d'alternatives de résultat de reconnaissance de la liste étant pondérées avec une valeur numérique déterminée,
- un bloc fonctionnel (9) pour la formation d'une pondération d'adaptation pour une alternative de résultat de reconnaissance utilisée pour l'adaptation, la pondération d'adaptation étant formée par le fait que la valeur de probabilité pondérée attribuée à cette alternative de résultat de reconnaissance est mise en rapport avec la somme des valeurs de probabilité pondérées attribuées aux autres alternatives de résultats de reconnaissance de la liste.

FIG. 1

FIG. 2

FIG. 3